# EUROPEAN PATENT APPLICATION

(11) **EP 1 760 646 A2**
(43) Date of publication of application: **07.03.2007**
(21) Application number: 06017977.7
(22) Date of filing: 29.08.2006
(51) Int. Cl.: G06Q 10/00

(54) **System and method for managing and regulating object allocations**

(30) Priority: 30.08.2005 US 712089 P
(71) Applicant: SAP AG, 69190 Walldorf (DE)
(72) Inventor: Ihle, Michael, 76694 Forst (DE); Westendorf, Frank, 76698 Ubstadt-Weiher (DE); Maerkle, Luz, 52074 Aachen (DE)
(74) Representative: Lehmann, Judith Christina

(57) **Abstract**

The present invention relates to a system for the management and regulation of allocations of objects of a first entity to objects of a second entity, wherein the first entity and the second entity can in each case communicate via an interface with the system, the system comprising at least the following units:
a first register unit for registering the objects of the first entity by generating and filing allocation objects referencing the respective objects,
a second register unit for registering the objects of the second entity by generating and filing business objects referencing the respective objects,
a segment unit for defining, generating and registering logic subsets of the business object,
a first allocation unit in which allocations between allocation objects of the first register unit and logic subsets of the segment unit can be defined, generated and retrievably filed, and
a second allocation unit in which allocations between business objects of the second register unit and logic subsets of the segment unit can be defined, generated and retrievably filed. In addition the present invention relates to a corresponding method, a corresponding computer program and a suitable computer program product.

## Description

### Field of the Invention

The present invention relates to a system and a method for managing and regulating allocations between object of various systems, and in particular relates to a system and a method for managing and regulating allocations between objects of an inventory-controlling system and objects of a second system, according to predeterminable order criteria.

### Background of the invention

Relationships and allocations between objects of various systems play an important role, in particular in the business management sector, such as for example in the insurance sector, since existing allocations are often connected with various actions or the derivation of rights and obligations, such as for example in the case of insurances involving a calculation of commissions when an insurance contract is successfully concluded or the initiation of some other business process in systems connected therewith. Since the allocations often exist between objects that belong to various systems and therefore the allocations often relate to a very heterogeneous system environment, as a result of which none of the systems takes over or can take over the management and control of the allocations, it would be desirable, on account of the fact that apart from the actual objects it is specifically the allocations between the objects that can play an important role, to make available a system and a method that can basically take over a management and regulation of such allocations between objects of various systems. Such a system or method should moreover be suitable for managing allocations of objects whose system affiliation varies greatly and that as a rule are in many cases not well defined. Accordingly, the system and process should have a very generic structure and should be able to be integrated into such a heterogeneous system environment.

From WO 2004/079588 A1 a method is known for data allocation, in which data objects of an inventory are subdivided into segments, for which in turn allocations can be carried out on request via an intermediate unit. In this case a segment allocation is realised that is available for calculations in a system, such as for example in a commission system.

### Description of the invention

Against the background of the cited prior art the present invention now make available a system for the management and regulation of allocations of objects with the features of claim 1, and a corresponding method with the features of claim 16. In addition a computer program with the feature of claim 31 is made available, and a computer program product with the features of claim 32 is made available.

According to claim 1 a system for the management and regulation of allocations of objects of a first entity to objects of a second entity is made available, wherein the first and the second entities may in each case communicate with the system via an interface. The system according to the invention includes at least a first register unit for registering the objects of the first entity by generating and filing allocation objects referencing the respective objects, a second register unit for registering the objects of the second entity by generating and filing business objects referencing the respective objects, a segment unit for defining, generating and registering logic subsets of the business objects, a first allocation unit in which allocations between allocation objects of the first register unit and logic subsets of the segment unit can be defined, generated and retrievably filed, and a second allocation unit in which allocations between business objects of the second register unit and logic subsets of the segment unit can be defined, generated and retrievably filed.

The first entity may for example be a group of processors or organisation units within a company, wherein the objects of the first entity are represented by the individual processors or by specific predefined groupings of processors or by organisation units. For example, in the case of the insurance industry the first entity may be a group of insurance agents or corresponding organisation units of specialist clerks in an insurance company.

The second entity may for example be a system managing a specific inventory. This could for example in the insurance industry be a system managing existing insurance contracts. The objects of the second entity would then be regarded as the insurance contracts. In this special case an inventory should be understood as a number of insurance contracts, which are combined according to certain aspects to form an inventory.

In the special case of the insurance industry the system according to the invention makes available a functionality, which with the aid of allocations of business objects to logic subsets, which are hereinafter termed segments, and allocations of the segments to allocation objects, permits an allocation and administration of business objects, which for example in the case mentioned above would represent insurance contracts, to so-called segment receivers, such as for example in the case mentioned above to commission contracts. The system according to the invention may therefore be termed a so-called inventory allocation, which forms, regulates and manages business object allocations, i.e. bundles of business objects, to logic subsets, so-called segments, and furthermore forms, regulates and manages their respective allocation via a so-called segment allocation to a segment receiver. A business object may, as already mentioned, represent for example an insurance policy. An allocation object may in this connection represent for example a commission contract. A logic subset is termed a segment, and represents a logic subset of business objects. The allocations of business objects to segments are hereinafter termed business object allocations (BOA). The allocations of segments to allocation objects are hereinafter termed segment allocations (SA).

Accordingly, the system according to the invention enables allocations between objects of an inventory control system and further objects, such as for example commission contracts, to be formed and managed according to specific order criteria. A11 allocations are in this connection realised via segments, by means of the first and second allocation units.

The system according to the invention basically consists of five components, which appropriately interact and thereby form allocations of objects of the first and second entities. In this connection it should be noted that the objects of the first entity as well as the objects of the second entity furthermore exist physically in the first and second entities, and can be represented and filed in the system according to the invention only by allocation objects and business objects referencing the respective objects. Accordingly, the logic subsets of the business objects and the so-called segments also do not consist of physically present objects but of business objects referencing the corresponding objects.

An allocation of business objects to segments may in this connection take place according to corresponding order criteria. The segment is a partial inventory of the business objects, which in turn represent objects of the second entity. Such a partial inventory of business objects may be defined, i.e. may be created according to certain order criteria. Such order criteria may for example be geographical, product-related, customer group-related, function-related order criteria, or may be combinations thereof. An inventory is, as already mentioned, an existing quantity of specific objects, for example of a company. The objects may be customers, contracts and/or products. An inventory can be subdivided according to specific business administration criteria, such as for example space, product lines or the like, into different partial inventories, which in turn is reflected by defining, generating and registering the segments of the business objects.

A process can therefore be created in the system according to the invention in which business objects are allocated to segments and allocation objects are allocated to segments. In the narrower sense, or in the aforementioned special case of an insurance company, such a process may correspond for example to a transfer of a vacant inventory of insurance contracts to one or more new commission receivers. The vacant inventory of insurance contracts is in this case represented in the system according to the invention first of all by a corresponding number of business objects. In addition the inventory is subdivided according to specified or selectable criteria into partial inventories, which corresponds to bundling the business objects into segments reflecting the partial inventories. The partial inventories may in this connection be split up for example according to regional affiliation of the insurance contract partners. The segments are then also built up correspondingly. The segments are now in each case allocated to an agent, i.e. a potential commission receiver, who is chosen as agent for a specific region. The system according to the invention now forms in a detailed manner in its individual components the resulting allocation structure.

In a possible embodiment of the method according to the invention the system makes available at least one user interface via which inputs, in particular object-specific and/or entity-specific data and queries, can be undertaken.

In this connection it is possible for the definition, generation and/or registration of segments of the business objects in the segment unit to be modulated and/or controlled via the user interface. Furthermore, for example so-called free segments can be selected and in addition new vacant allocation objects, such as for example commission contracts, can be allocated. A free segment means in this connection a segment which in addition could not be allocated to an allocation object.

This means that, apart from the modulation and control of the definition, generation and/or registration of segments, in a further embodiment of the system according to the invention it is possible via the user interface to influence and/or to control the definition, generation and filing of allocations between allocation objects of the first register unit and segments of the segment unit in the first allocation unit.

In this connection it is conceivable that inputs and/or queries via the user interface can be undertaken only by an authorised and authenticated user. This means that a reading and/or writing entitlement via the user interface and thus an influencing of the system can take place only in an authorised manner.

The system according to the invention can thus be influenced in a purposeful manner by the provision of at least one user interface. In this connection it may be envisaged, by means of a menu provided in the user interface, to be able to look after, i.e. create, alter and display, segments; to be able to look after, i.e. again to create, alter and display allocations of business objects to segments, and to be able to look after, i.e. create, alter and display allocation of segments to allocation objects. A report specific to each menu point can in this connection be made available on the part of the system.

The system according to the invention manages allocations between segments and business objects and allocation objects. As already mentioned these objects have their origin in other systems, i.e. in the first or second entity, from which they are appropriately notified to the system according to the invention via the respective interface. The creation, alteration and cancellation of business objects and of allocation objects via the user interface that is made available may therefore be provided basically only for an exceptional case. A user may for example by himself create corresponding dialogues that can be conducted via the user interface. A corresponding documentation may be made available.

In another possible embodiment of the method according to the invention it is also conceivable to make the user interface available to a user via an external framework that can be connected to the system.

The system according to the invention is fully decoupled from the first and second entities and is accordingly autarkic, but communicates however with the first and second entities via corresponding interfaces. In this connection it is possible for the first and/or second entity to communicate dynamically object-specific information to the system via the respective interfaces, and to be able to communicate in a reading and/or controlling manner with the system. Thus for example queries on the part of the first and/or second entity may be possible, for example periodically, for example over a specific timeframe. The system according to the invention consists of at least five components, which regulate the allocations and/or relationships of business objects to the allocation objects via segments, via two allocation units, so-called allocation roles. The system according to the invention stands as a managing system for allocations between objects that are not originally handled in the system itself. The management of the corresponding objects as regards contents, in particular also their attributes, is the task of the connected systems, i,e. the first and second entities. On grounds of redundancy it also does not appear expedient to manage object attributes in the objects intrinsic to the system.

In a further embodiment of the system according to the invention the allocation objects to be registered in the first register unit reference the objects of the first entity by means of an object type statement, an object identity number and an object origin statement.

In another embodiment of the system according to the invention the business objects to be registered in the second register unit also reference the objects of the second entity by means of an object type statement, an object identity number and an object origin statement.

In both the aforementioned cases it is also possible to use in addition user-specific attributes for the respective referencing.

In the same way it is conceivable to register the segments of the business objects in the segment unit likewise via a segment identification number and a segment type.

In this connection it is moreover conceivable to file the allocations between business objects of the second register unit and segments of the segment unit in the second allocation unit in each case by stating the segment identification number, segment type, business object identification number, business object type and an allocation type and other selectable attributes that can be input in particular by a user.

In the same way it is conceivable to file the allocations between allocation objects in the first register unit and segments of the segment unit in the first allocation unit in each case by stating the segment identification number, segment type, allocation object identity number, allocation object type and an allocation type and other selectable attributes that can be input in particular by a user.

The segment is a system-specific layer between the business object and allocation object. The system according to the invention can request via the respective interfaces information on the objects of the first and second entities, respectively, since these objects are to be managed in the system according to the invention, but are originally handled in the first and second entity, respectively. Basically in this connection there may be two types of information, which are transferred to the system according to the invention on the part of the connected first and second entity, respectively. On the one hand this information may be metadata information on the corresponding objects. In addition it may be a data record/information record concerning the corresponding objects, which are predetermined for example as a "character string".

When coupling the system according to the invention to the first and second entities to be connected thereto, it must be ensured that for the management and regulation of the objects of the corresponding entities all three systems ultimately "speak the same language". For this purpose, in a further embodiment of the system according to the invention a control unit may be explicitly provided that defines and controls the communication of the system with the first and second entities.

Thus, it may be possible for example that only selected allocations are possible or permitted between the objects of the first and second entities. Furthermore it is conceivable that there is only one selection of defined allocations between objects of the first and second entities.

In the case where the second entity is, as already mentioned hereinbefore, a number of insurance contracts to be managed, and where the first entity is the staff processing and/or managing the insurance contracts, then for example four different allocation types are conceivable. On the one hand a settlement agent, an inventory handler, an adjustments agent and/or an extension agent may be involved in an insurance contract. Insurance clerks may be allocated to an insurance contract via these different types.

In addition it is also conceivable to define different types of business objects, and in the case of insurance contracts it is for example possible to distinguish four different business object types in the system according to the invention, such as for example policy, contract, contract partial package and contract part.

Via the corresponding interfaces it is now conceivable for the first and second entities to notify the system according to the invention of the relevant object types and allocation types from the respective entity with regard to an envisaged integration scenario, which are then correspondingly filed in the system according to the invention and are used to generate the allocations, the business objects, the allocation objects and the segments. These types now filed in the corresponding system according to the invention are known to the first and second entities, so that mechanisms can be provided in the first and second entities in order to copy the types employed in the respective entities to the types now filed in the system according to the invention. A communication of the first and second entities via the respective interfaces with the system according to the invention may in this connection be effected online, i.e. automatically at a suitable time, such as for example during an alteration of the number of the objects managed in the respective entities, or alternatively a communication can be periodically initiated at specific intervals.

It is understood that the embodiment discussed in more detail hereinbefore represents only one example of a possible use of the system according to the invention, and obviously other object types and combinations are also possible when using the system according to the invention.

It is furthermore conceivable to provide business objects that are filed in the second register unit in the system according to the invention with attributes, and to manage such objects in a version-dependent manner; in other words, an alteration of the objects of the second entity that form the basis of the business objects must be notified to the system according to the invention, so that the business objects referencing the corresponding objects can be consistently managed. A cancellation of an object to which reference is made via a business object in the system according to the invention can also be notified to the system according to the invention, and the corresponding business object can there be characterised as deleted.

As already mentioned, it is possible via a user interface made available on the part of the system according to the invention to read filed allocation constellations represented in the system according to the invention. In the case of an insurance company it is for example conceivable to read the inventory of a specific agent. At the same time it is conceivable that the system according to the invention prepares a report with which the inventory allocation information can be read starting from a specific target date.

In order to effect a synchronisation between the first and second entities and the system according to the invention, it is conceivable for the system according to the invention to provide a so-called report, with which a synchronisation of for example version-guided business object data can be effected. The so-called report then transfers the identity numbers of the objects managed in the system according to the invention and the date of the latest state of knowledge, in the form of a table to the corresponding entity. In response to this a table containing entries concerning the changes to the listed objects made from this time on is prepared by the corresponding entity via the corresponding interface.

In the system according to the invention the first and second entities to be connected can be configured via a corresponding identification of the corresponding entities. In this way it is possible to configure the system according to the invention completely decoupled from the entities to be connected, and to connect these via corresponding interfaces to the system according to the invention.

A further example apart from the example, already mentioned several times, of the insurance industry in connection with insurance contracts and commission contracts, is the case of partnerships, the detailed infrastructure of which can likewise be regulated and managed by a system according to the invention.

Apart from the already mentioned management functionalities, which as a rule are triggered from outside, i.e. via a user through a user interface or via the first and/or second connected entity, the system according to the invention can in a further embodiment provide functionalities with regard to processes operated by the system itself, for the creation, alteration and termination of objects and allocations of these objects among one another. Such functionalities are then appropriately connected to the five components of the system according to the invention. With the aid of these functionalities it is possible for a user to deal individually and in an object-specific manner with changes in the five basic components.

As has already been mentioned hereinbefore, it may be possible to care for and look after segments via the user interface provided in an embodiment of the system according to the invention. The care of segments consists of an arrangement, an alteration including a termination, and a display of segments. The care is independent of allocations of business objects to segments and of the allocation of segments to allocation objects. In this connection dedicated windows with corresponding function icons may be made available for the care of the segments. Via corresponding icons a selection of segments is possible for the display of segments or for the implementation of a change. In the selection of segments it is for example also possible to select segments that for example are not allocated to an allocation object. In the case of insurance contracts this would for example be a segment in which insurance contracts are combined that have not been allocated to an insurance agent.

Apart from the care of segments it is also conceivable that, via the user interface that is made available in an embodiment of the system according to the invention, a care of allocations of business objects to segments is possible that again consists of a creation of a new allocation, an alteration of an existing allocation including a deletion, and a display.

Similarly it is conceivable in yet a further embodiment of the system according to the invention that a care of allocations of segments to allocation objects is possible via the user interface that is made available. In this connection the care of the allocation of segments to allocation objects again likewise involves a creation of a new allocation, an alteration, and a display of existing allocations.

In addition, it may be possible in a further embodiment of the system according to the invention to provide navigation possibilities via the user interface that is made available, It is for example possible by double-clicking to jump between an allocation of business objects to segments, and an allocation of segments to allocation objects. The following scenario may serve to illustrate this:

A segment "4711" should, as far as business object A, which is to be newly allocated to a segment "4812", no longer be allocated to an allocation object 10 but should be newly allocated to an allocation object 11. This is therefore an alteration of two allocations in the same context, which have to be accommodated via two different menu points in the user interface. In order to simplify the execution of such a procedure the possibility is provided of navigating the allocation of segments to allocation objects for the allocation of business objects to segments. It may for example be envisaged that by double-clicking on the segment identification number, a jump can be made from the displayed allocation of segment "4711" to the allocation object 10, to the allocation of business objects to the segment "4711". The information regarding segment type and segment identity number are in this connection picked up by the "jump point", so that the allocated business objects are displayed immediately. Here the business object A can be newly allocated to the segment "4812". The previously displayed allocation of segments to allocation objects is reached again by jumping back. By jumping backwards and forwards a so-called "popup" can also appear, asking whether the previously input alterations are to be saved. If the user answers this question in the affirmative, then the previously altered data are saved in a corresponding databank of the system according to the invention. Conversely, it may be possible to jump, by double-clicking, from an allocation of business objects to segments, to a segment identity number in an allocation of segments to allocation objects, so as to display or alter there the allocations of the segment.

An implementation of user individual selections may be made possible by suitable separate selection options on a screen of the user interface that is made available, so that corresponding selections can be made.

According to the invention the allocation between objects of the first entity and the second entity takes place via a respective segment filed in the segment unit. In this connection various segment types can be distinguished. A segment type categorises segments, i.e. logical subsets of business objects of an inventory with specific manifestations. Each segment type represents a specific approach to the inventory. Depending on the approach an inventory can be split up for example according to the following order criteria: geographically; product-related; customer group-related; function-related, or according to other combinations. A product-related segment type is for example a subdivision according to products along specific product lines. A geographical segment type exists if for example customers are subdivided according to operating regions. A segment allocation documents an allocation between a segment and an allocation object, such as for example a commission contract. A so-called segment allocation role specifies in this connection the nature of the allocation between commission contract and segment, i.e. whether for example an additional commission case is triggered or not. A segmentation carried out with the system according to the invention describes an administrative procedure for the modelling of segments. The purpose of a segment is, as already mentioned, to carry out an ordered bundling of business objects. Thus, business objects can be bundled according to postcode, product group, etc., or alternatively business objects can be bundled as regards their handling by a responsible agent.

In addition the present invention relates to a method for the management and regulation of allocations of objects, such as for example of commission contracts or agents, of a first entity to objects, such as for example insurance contracts, of a second entity, wherein the first entity and the second entity can communicate in each case with a regulation system switched between the first and the second entities. In the method according to the invention the objects of the first entity are registered in a first register unit of the regulation system by creating and filing allocation objects referencing the respective objects of the first entity, and the objects of the second entity are registered in a second register unit of the regulation system by generating and filing business objects referencing the respective objects of the second entity. In addition logic subsets of the business objects are defined and generated, and registered as segments in a segment unit of the regulation system. Allocations between allocation objects and segments of the segment unit and allocations between business objects and segments of the segment unit are defined, generated, and retrievably filed.

In an embodiment of the method according to the invention at least one user interface is made available, via which inputs, in particular object-specific and/or entity-specific data and queries can be carried out.

In a further possible embodiment of the method according to the invention the definition, generation and/or registration of segments of the business objects are modelled and/or controlled in the segment unit via the user interface.

Furthermore it is conceivable that the definition, generation and filing of allocations between allocation objects of the first register unit and segments of the segment unit in the first allocation unit are influenced and/or controlled via the user interface.

It is also possible that before or during inputting and/or queries an authorisation and authentication check of the user is carried out on the part of a user via the user interface.

According to a further embodiment of the method according to the invention the user interface is made available via an external framework that can be connected to the system.

According to another embodiment of the method according to the invention the first entity and/or the second entity can deliver object-specific information dynamically to the regulation system via the respective interfaces, and in addition can communicate in a reading and/or controlling manner with the system. This means that the first and second entities can execute queries, for example periodically. Queries executed in this way can relate for example to a specific timeframe.

It is conceivable that the allocation objects to be registered in the first register unit reference by means of an object type statement, an object identity number and an object origin statement, the objects of the first entity.

Likewise, it is possible that the business objects to be registered in the second register unit reference by means of an object type statement, an object identity number and an object origin statement, the objects of the second entity.

According to a further embodiment of the method according to the invention user-specific attributes are additionally used for the respective referencing.

Furthermore it is possible that the logic subsets, i.e. the segments in the segment unit, are registered via a segment identity number and a segment type.

In another embodiment of the method according to the invention the allocations between business objects of the second register unit and segments of the segment unit in the second allocation unit are filed in each case with a statement of the segment identity number, segment type, business object identity number, business object type and an allocation type, and other selectable attributes that can be input in particular by a user.

Furthermore it is possible that the allocations between allocation objects of the first register unit and segments of the segment unit in the first allocation unit are filed in each case with a statement of the segment identity number, segment type, allocation object identity number, allocation object type and an allocation type, and other selectable attributes that can be input in particular by a user.

Furthermore a control unit can be provided that defines and controls the communication of the system with the first and second entities.

Furthermore an adapter unit can be provided in which object types and role types collated with the first and second entities can be filed for corresponding allocations, and with the help of which the objects of the first entity, the objects of the second entity and corresponding allocations for the individual units of the system can be made processable.

The present invention moreover relates to a computer program with program coding means in order to carry out all steps of a method according to the invention when the computer program is run on a computer or a corresponding computing unit.

The invention also comprises a computer program product with program coding means that are stored on a computer-readable data carrier in order to carry out a method according to the invention when the computer program is run on a computer or a corresponding computing unit.

Further advantages and modifications of the invention follow from the description and the accompanying drawings.

It is understood that the features mentioned hereinbefore and those still to be explained hereinafter can be used not only in the combination specified in each case, but also in other combinations or in isolation without departing from the scope of the present invention.

### Brief description of the drawings

The invention is illustrated diagrammatically in the drawings with the aid of an embodiment and is described in detail hereinafter with reference to the drawings.
Figure 1 shows a diagrammatic representation of an architecture in which an embodiment of a regulation system according to the invention is arranged embedded between two entities;
Figure 2 shows a more detailed diagrammatic representation compared to Fig. 1 of a system architecture of another embodiment of a regulation system according to the present invention;
Figure 3 shows an internal structure of another embodiment of a regulation system according to the invention; and
Figure 4 shows a further more detailed structure of a further embodiment of a regulation system according to the invention.

### Detailed description of the drawings

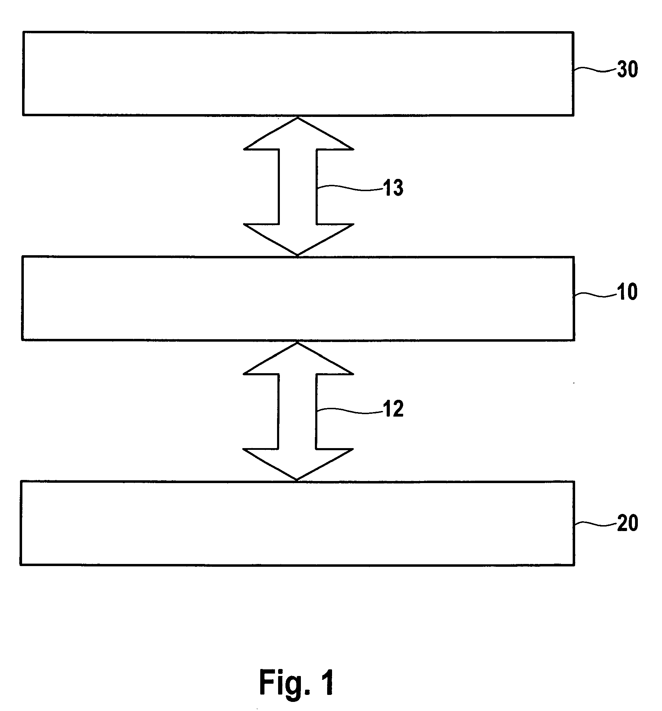

Fig. 1 shows a diagrammatic representation of an architecture of an embodiment of the system 10 according to the invention, which is embedded between two entities 20 and 30. The regulation system 10 is coupled via a first interface 12 to the first entity 20, and via a second interface 13 to the second entity 30. Information concerning the first entity 20 as well as the second entity 30 can flow into the regulation system 10 via the respective interfaces 12 and 13, wherein corresponding allocations of objects of the first entity 20 to objects of the second entity 30 can then be permanently specified, filed and made reproducible. Such allocations may in this connection be undertaken under various aspects, i.e. allocation groupings may be formed and the objects are coupled via so-called segments. The second entity 30 may for example be a so-called inventory system, in which an inventory, i.e. an existing quantity of specified business objects, such as for example customers, contracts or products of a company, are filed. An inventory can be subdivided into various partial inventories according to specific business administration criteria, such as space or product lines. The objects of the inventory system are filed in the regulation system 10 as business objects referencing the objects of the inventory system, and are managed as it were as virtual objects. Objects of the second entity 30 correspond to objects such as for example commission contracts or business partners or insurance agents. In the regulation system 10 according to the invention the objects of the second entity 30 can now be bundled in the form of segments. The segments can then in turn be allocated to objects of the first entity 20. The correspondingly characteristic allocation types between objects of the first entity and objects of the second entity to the respective segments can be filed, reproduced and
characterised in the regulation system 10. In this connection it is conceivable that the first and the second entities as well as the regulation system 10 in each case form autarchic systems, which can then correspondingly communicate with one another via suitable interfaces 12 and 13. The regulation system 10 must be appropriately configured corresponding to the first and second entities.

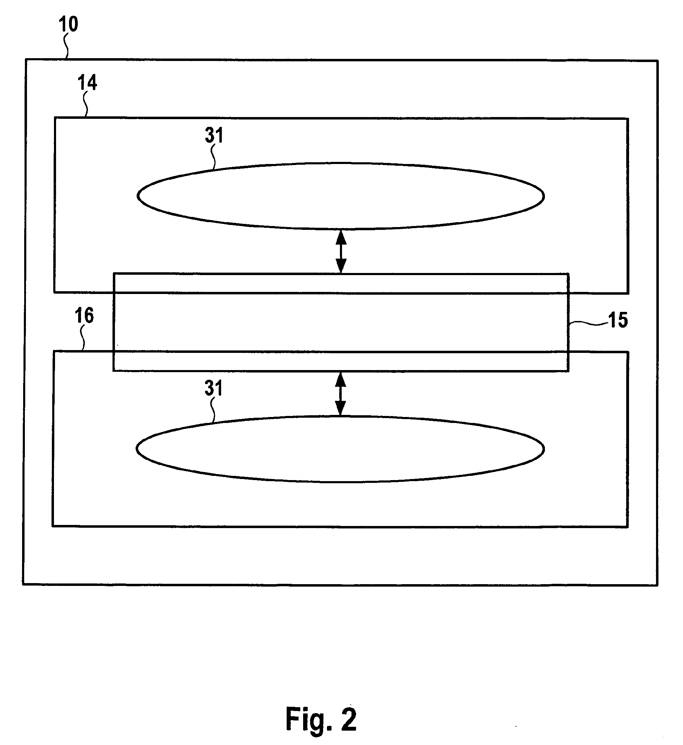

Fig. 2 shows in a diagrammatic representation allocations formed in an embodiment of the regulation system 10 according to the invention between objects of a first entity and objects of a second entity. The objects of the first entity are filed in the regulation system 10 as allocation objects 21 referencing the objects of the first entity. The objects of the second entity are filed in the regulation system 10 as business objects 31 referencing the objects of the second entity. The first entity may for example be a system for managing commissions or for managing so-called master data, such as for example business partners, commission contracts and also organisation structures and marketing structures. The second entity may for example be a so-called inventory system. In this connection it may be a product-operating regulation system for insurance systems.

The regulation system 10 now serves to reproduce various possible allocations between objects of the second entity and objects of the first entity, and to manage, reproduce and file allocations of business objects via so-called segments to corresponding segment receivers and allocation objects, respectively. In addition it may be possible here to generate and modulate segments, and to file user-specific attributes.

It is for example conceivable that the allocation object 21 references a commission contract "1000", i.e. an object filed in the first entity. This commission contract "1000" can now be associated with or coupled to a specific insurance contract "4711", which is filed in the second entity. This insurance contract "4711" is reproduced as business object 31 in the regulation system 10. On the one hand the insurance contract "4711" can now be allocated directly to the commission contract "1000". On the other hand a two-stage allocation may however also take place, namely an allocation via a suitable segment 15, which for example bundles all insurance contracts for which an agent, who is in turn coupled to the commission contract "1000", is responsible. If the agent is responsible for example for the insurance inventory "Region: Munich", then the segment 15 bundles all the business objects referencing the corresponding insurance contracts of the insurance inventory "Region: Munich" of the second entity. If the insurance contract "4711" likewise falls in this insurance inventory, then the business object 31 that refers to the insurance contract "4711" is also allocated to the segment 15 via a so-called business allocation (BA). The allocation object 21 that refers to the commission contract "1000" associated with the agent is then likewise allocated to the segment 15 via a so-called segment allocation (SA), so that ultimately although the allocation object 21 is connected via the segment 15 to the business object 31, nevertheless both the segment 15 as well as the business allocation and the segment allocation simultaneously permit via the stepwise allocation a detailed and specific outcome and also a decoupling of the allocation. A business object can be grouped together with other business objects according to specified conditions in the segment 15, independently of allocation objects associated therewith. This corresponds to an already mentioned, so-called business allocation. Thus, segments can be formed via a11 objects filed in the second entity, that bundle the objects of the second entity according to specific objective aspects. All business objects of a segment have a common characteristic. An allocation abject referencing an object of the first entity, such as for example the commission contract "1000", can then in turn be allocated to a specific segment 15.

The following procedure is conceivable: free inventories not allocated to an agent are allocated to new segments according to business and political aspects, such as for example according to regions and/or product lines, so that these can be explicitly allocated at a later time to an agent, i.e. to an intermediary or case handler. An intermediary may in this connection assume various roles in a company. The roles that an intermediary A can assume within the framework of his intermediary activities for a company U is specified contractually. If an insurance inventory, i.e. a segment, is not allocated ab initio to the intermediary A, then at this point in time no allocations are possible via the regulation system 10. If a free insurance inventory is allocated to the intermediary A immediately at the start of his involvement in the insurance, then this insurance inventory, which is formed in the regulation system 10 by one or more segments, can be allocated a corresponding commission contract, namely that of the intermediary A. If the intermediary A sells insurance policies of the company, then after successful conclusion of a policy deal the business allocations of the policies are updated corresponding to the segment. With a successful handling of a new insurance policy this should be allocated to the partial inventory of an intermediary A. If an insurance company operates an assigned territory and/or customer system, the corresponding partial inventory can be established via a regulatory apparatus with the corresponding information.

Participatory percentages, such as for example for direct or indirect commissions for possible future commission cases, for example consequential commission cases for extensions of insurances or a dynamic adjustment in the case of life insurance policies, can for example also be stored in the regulation system 10 so that they can subsequently be reused. If technical alterations to a policy should arise, such as for example extension, increased contributions or dynamic adjustment, then possibly the corresponding participation percentages that were then stored in the regulation system 10 may be required for these determined commission cases.

If an insurance inventory is conditionally allocated to a new intermediary B, it may happen that the allocation of the previous intermediary A still exists. If the new intermediary B effects a change in an insurance policy, this policy is allocated to its inventory, i.e. to its partial segment. Such conditional or provisional inventory allocations may for example in some cases also be for a fixed term. If for example technical changes are made to a policy, such as for example extensions, increased contributions or dynamic adjustments, then possibly the corresponding participation percentages that are stored in the regulation system 10 are required for the commission cases to be newly determined. The regulation system 10 accordingly contains information on the participatory percentages, so-called split rates, for direct and indirect remunerations, which in connection with an inventory and its segment allocation to an allocation object, i.e. to an intermediary or to a commission contract, are filed in the regulation system 10. Such changes may be taken care of in the regulation system 10 via a dialogue or may also take place periodically via corresponding global changes in the so-called batch.

If an insurance policy is terminated, the corresponding segment or partial segment associated with the insurance policy must be adjusted in the regulation system 10. In the case where information has to be given to a current intermediary dealing with a policy, the intermediary can be specified via a user interface appropriately made available by the regulation system 10, through the regulation system 10 and via the insurance policy-segment-commission contract route, since exactly one such a representation is made available via the regulation system 10. The regulation system 10 can therefore serve to form and provide a corresponding infrastructure on request. Such a provision of infrastructures in connection with insurance policies and commission contracts associated therewith may be desired in various situations, such as for example where correspondence is generated or a periodic commission is paid on the basis of a segment or on the basis of a policy.

Accordingly, any types of allocations and their changes can be reproduced and filed, and displayed on request in the regulation system 10. By generating segments an allocation can be subdivided into two allocations separate from one another, namely a so-called business allocation, in which a business object is allocated to one or more segments, and a segment allocation, in which an allocation object is allocated to one or more segments. By means of such a subdivision it is possible to classify the corresponding allocations more precisely and thereby enable more detailed enquires to be made. Independently of the possibility of two separate types of allocation illustrated and described here, the degree of freedom can be raised as desired by establishing suitable further roles in the allocations.

In addition so-called evaluation tools can be made available for an analysis of a current inventory allocation on the part of the regulation system 10. It is possible via such an evaluation tool to raise specific queries as regards filed data, such as for example with regard to a specific intermediary and his activity over a certain time. All other types of queries relating to a specific inventory and a specific time are thus conceivable.

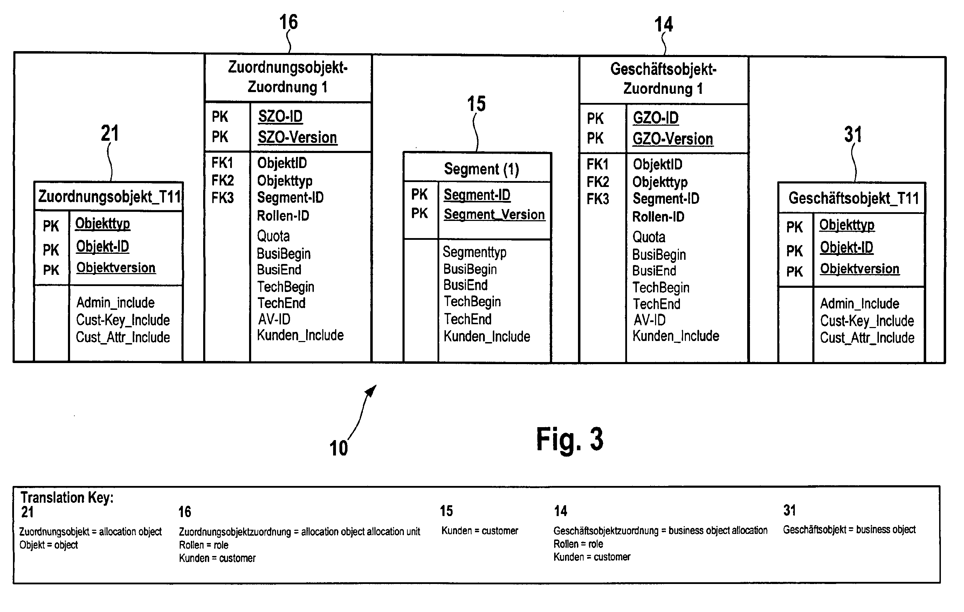

Fig. 3 shows a regulation system 10 with the basic components from which the regulation system 10 is built up. An allocation object 21 is shown, which is allocated via an allocation object allocation unit 16 to a segment 15. In addition a business object 31 is allocated to the segment 15 via a business object allocation unit 14. These five components form allocations of business objects to allocation objects via segments through two so-called allocation roles.

The allocation object 21 references in this connection an object filed in a first entity, such as for example a commission contract or an intermediary or an organisation unit within a company. The object that is represented by the allocation object 21 is referenced via a so-called object type, an object identity number (Object ID) and an object version. Apart from these three items of information regarding the object to be referenced, it is also possible on the part of a user to give further object-specific attributes. In addition keys may also be predetermined by the customer. It is also conceivable to provide further management-specific information for the management within the regulation system 10.

A so-called segment allocation identity number (SA-ID) and a segment allocation version (SA-Version) are filed in the allocation object allocation unit 16 that describes the allocation and the relationship between the allocation object 21 and segment 15. In addition the corresponding object identity number (Object-ID), the object type and, on the part of the segment, a segment identity number (Segment-ID) are filed in order to characterise the object 21 associated with the segment 15. In addition an identity number as regards an allocation role, i.e. a type identification of the allocation under a role-ID, is filed. Further attributes are conceivable. In this case it is possible to specify timeframes or a time at which the specific allocation is started or completed or will be completed. Here too it is possible to add further attributes on the part of a customer or user, which are displayed if a corresponding query is made.

The segment 15 is likewise filed with a segment identity number (Segment-ID) and a segment version. In addition a segment type is specified. Corresponding to the details that can be actuated for the allocation object allocation unit 16, details can also be filed together with the segment 15.

The business object allocation 14 is likewise characterised via a business allocation identity number BA-ID and a business object allocation version BOA-version. Furthermore, also the object relating to the business object allocation is characterised by an object-ID and an object type, and the affected segment 15 is similarly filed via a segment-ID. Furthermore a role-ID is specified for the identification of the allocation type. Apart from these data similar information can optionally be filed, such as can be made available in the allocation object allocation Unit 16.

The business object 31 is likewise characterised via an object-ID characteristic of the object to be referenced, and an object type, as well as an object version. Here too inputs regarding a key or further attributes are possible on the part of the customer.

By means of the regulation system 10 it is possible via a suitably provided user interface to interrogate such tables, whereby an accurate representation of a specific allocation of an allocation object via an allocation object allocation unit to a segment and further via a business object allocation unit to a business object, can be provided and displayed. The regulation system 10 exists as a managing system for allocations between entities that are not originally managed in the regulation system. Accordingly, it is sufficient in regard to a pure data management for the regulation system 10 simply to have a knowledge of the type, identity number and system origin of the objects to be managed. A contents-type management of these objects, in particular their attributes, is the task of the connected system. Object attributes are, for reasons of redundancy, preferably not managed in the regulation system-specific objects, namely in allocation objects and business objects.

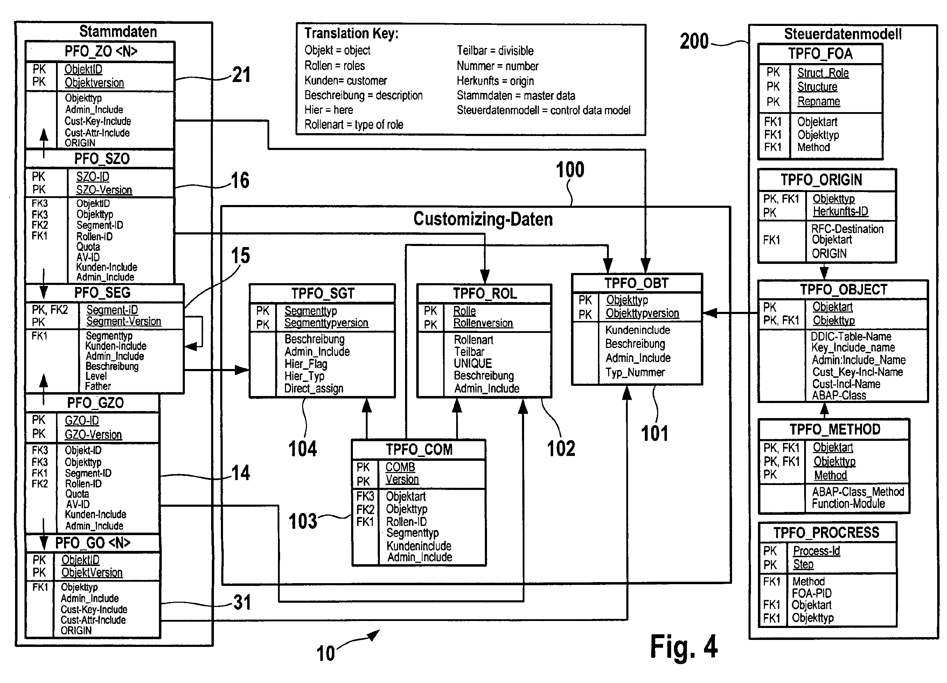

Fig. 4 shows a detailed representation of a possible architecture of a regulation system 10 according to the invention. The five basic components of the regulation system 10 are again shown on the left-hand side, namely an allocation object 21 that references an object of a first entity, which object is displayed by an object identity number (Object-ID) and an object version. An object type is also given. Furthermore attributes may be filed. In addition an allocation object allocation unit 16 is shown that couples the allocation object 21 to a segment 15. The allocation object allocation unit 16 is in turn characterised by a so-called allocation object allocation-ID and an allocation object allocation version. Together with the allocation object allocation unit an object-ID, an object type and a segment-ID and a role-ID are also filed, which specify the allocation between the allocation object 21 and the segment 15. The segment 15 is in turn characterised by a segment-ID and a segment version; furthermore a segment type is filed. Further attributes, such as for example user-specific attributes, may be added. In addition a business abject 31 is shown that is in turn characterised by an object-ID and an object version, which represent the object of a second entity to be referenced by the business object. Furthermore an object type is filed and further attributes may be added. The business object 31 is connected via a business object allocation 14 to the segment 15. The business object allocation 14 is characterised via a business allocation-ID and a business allocation version. Furthermore an object-ID and an object type are filed together with the business object allocation 14, which represent the object of the second entity to be referenced, and a segment-ID and a role-ID are also given.

A further essential building block of the regulation system 10 is illustrated in the central region, namely the building block 100 in which are filed the types of objects, segments and allocations that are possible. Object types, both with respect to the allocation object 21 as well as with respect to the business object 31, are filed in a component 101. Here details of which types of objects are involved can be given and filed. These may for example be intermediaries, policies or other types of objects, for which allocations are to be activated in the regulation system via intermediate coupling of segments. The component 102 furthermore predetermines a type of allocations and the component 103 predetermines which allocations are to be permitted at all within the scope of the relevant scenario. Finally, the component 104 specifies what types of segments are possible, i.e. how business objects can be grouped. The component 200 of the regulation system 10 that is also shown corresponds to the part of the regulation system 10 in which corresponding configurations are effected, in order to permit a communication via suitable interfaces with external entities, the respective objects of which are to be mapped among each other and retrievably filed within the regulation system 10 together with corresponding allocations.

## Claims

1. A system for the management and regulation of allocations of objects of a first entity (20) to objects of a second entity (30), wherein the first entity (20) and the second entity (30) can in each case communicate via an interface (12, 13) with the system (10), the system comprising at least the following units:
a first register unit for registering the objects of the first entity by generating and filing allocation objects (21) referencing the respective objects,
a second register unit for registering the objects of the second entity by creating and filing business objects (31) referencing the respective objects,
a segment unit (15) for defining, generating and registering logic subsets of the business objects (31),
a first allocation unit (16) in which allocations between allocation objects (21) of the first register unit and logic subsets of the segment unit (15) can be defined, generated and retrievably filed, and
a second allocation unit (14) in which allocations between business objects (31) of the second register unit and logic subsets of the segment unit (15) can be defined, generated and retrievably filed.

2. The system according to claim 1, wherein the system (10) makes available at least one user interface via which inputs, in particular object-specific and/or entity-specific details, and queries can be handled.

3. The system according to claim 2, in which the definition, generation and/or registration of logic subsets of the business objects (31) in the segment unit (15) can be modelled and/or controlled via the user interface.

4. The system according to one of claims 2 and 3, in which the definition, generation and filing of allocations between allocation objects (21) of the first register unit and logic subsets of the segment unit (15) in the first allocation unit (16) can be influenced and/or controlled via the user interface.

5. The system according to one of claims 2, 3 and 4, in which the inputting and/or queries can be handled only by an authorised and authenticated user via the user interface.

6. The system according to one of claims 2 to 5, in which the user interface is made available via an external framework that can be connected to the system (10).

7. The system according to any one of the preceding claims, in which the first and/or the second entity (20, 30) can supply object-specific information dynamically to the system (10) via the respective interfaces and can communicate in a reading manner and/or controlling manner with the system.

8. The system according to any one of the preceding claims, wherein the allocation objects (21) to be registered in the first register unit reference the objects of the first entity (20) by means of an object type specification, an object identity number and an object origin specification.

9. The system according to any one of the preceding claims, wherein the business objects (31) to be registered in the second register unit reference the objects of the second entity (30) by means of an object type specification, an object identity number and an object origin specification to.

10. The system according to claim 8 or 9, in which in addition user-specific attributes may be used for the respective referencing.

11. The system according to any one of the preceding claims, in which the logic subsets are registered in the segment unit (15) as segments with a segment identification number and a segment type.

12. The system according to claim 10 or 11, in which the allocations between business objects (31) of the second register unit and logic subsets of the segment unit (15) in the second allocation unit (14) are in each case filed with details of the segment identification number, segment type, object identification number, object type and an allocation type, and other selectable attributes that can be input in particular by a user.

13. The system according to claim 10 or 11, in which the allocations between allocation objects (21) of the first register unit and logic subsets of the segment unit (15) in the first allocation unit (16) are in each case filed with details of the segment identity number, segment type, object identity number, object type and an allocation type, and other selectable attributes that can be input in particular by a user.

14. The system according to any one of the preceding claims, which furthermore comprises a control unit that defines and controls the communication of the system (10) with the first entity (20) and the second entity (30).

15. The system according to any one of the preceding claims, which in addition comprises an adapter unit in which object types and role types collated with the first entity (20) and the second entity (30) can be filed for corresponding allocations, and with the aid of which the objects of the first entity (20), the objects of the second entity (30) and corresponding allocations can be made processable for the individual units of the system (10).

16. A method for the management and regulation of allocations of objects of a first entity (20) to objects of a second entity (30), wherein the first entity (20) and the second entity (30) can in each case communicate with a regulation system (10) switched between the first and the second entities (20, 30), in which
the objects of the first entity (20) are registered by generating and filing allocation objects (21) referencing the respective objects of the first entity (20), in a first register unit of the regulation system (10),
the objects of the second entity (30) are registered by generating and filing business objects (31) referencing the respective objects of the second entity (30), in a second register unit of the regulation system (10),
logic subsets of the business objects (31) are defined, generated, and registered in a segment unit (15) of the regulation system (10),
allocations between the allocation objects (21) and the logic subsets are defined, generated, and retrievably filed in a first allocation unit (16) of the regulation system (10), and
allocations between the business objects (31) and the logic subsets are defined, generated, and retrievably filed in a second allocation unit (14) of the regulation system (10).

17. The method according to claim 16, in which at least one user interface is made available, via which inputs, in particular object-specific and/or entity-specific details, and queries can be handled.

18. The method according to claim 17, in which the definition, generation and/or registration of logic subsets of the business objects (31) in the segment unit (15) are modeled and/or controlled via the user interface.

19. The method according to one of claims 17 and 18, in which the definition, generation and filing of allocations between allocation objects (21) of the first register unit and logic subsets of the segment unit (15) in the first allocation unit (16) are influenced and/or controlled via the user interface.

20. The method according to one of claims 17, 18 and 19, in which an authorisation and authentication check of the user is carried out before or during the inputting and/or queries via the user interface on the part of a user.

21. The method according to one of claims 17 to 20, in which the user interface is made available via an external framework that can be connected to the system (10).

22. The method according to one of claims 16 to 21, in which the first and/or the second entity (20, 30) supply object-specific information dynamically via the respective interfaces to the regulation system (10), and communicate in a reading and/or controlling manner with the system (10).

23. The method according to one of claims 16 to 22, wherein the allocation objects (21) to be registered in the first register unit reference the objects of the first entity (20) by means of an object type specification, an object identity number and an object origin specification.

24. The method according to one of claims 16 to 23, wherein the business objects (31) to be registered in the second register unit reference the objects of the second entity (30) by means of an object type specification, an object identity number and an object origin specification.

25. The method according to claim 23 or 24, in which user-specific attributes are additionally used for the respective referencing.

26. The method according to any one of claims 16 to 25, in which the logic subsets are registered in the segment unit (15) as segments with a segment identification number and a segment type.

27. The method according to claim 26, in which the allocations between business objects (31) of the second register unit and logic subsets of the segment unit (15) in the second allocation unit (14) are filed in each case with details of the segment identity number, segment type, object identity number, object type and an allocation type, and other selectable attributes that can be input, in particular by a user.

28. The method according to claim 26 or 27, in which the allocations between allocation objects (21) of the first register unit and logic subsets of the segment unit (15) in the first allocation unit (16) are filed in each case with details of the segment identity number, segment type, object identity number, object type and an allocation type, and other selectable attributes that can be input, in particular by a user.

29. The method according to one of claims 16 to 28, in which in addition a control unit is made available that defines and controls the communication of the regulation system with the first entity (20) and the second entity (30).

30. The method according to one of claims 16 to 29, in which in addition an adapter unit is made available in which object types and role types matched to the first and second entities (20, 30) can be filed for corresponding allocations, and with the aid of which the objects of the first entity (20), the objects of the second entity (30) and corresponding allocations can be made processable for the individual units of the regulation system (10).

31. A computer program with program coding means in order to carry out all steps of a method according to one of claims 16 to 30 when the computer program is run on a computer or a corresponding computing unit.

32. A computer program product with program coding means that are stored on a computer-readable data carrier, in order to carry out a method according to one of claims 16 to 30 when the computer program is run on a computer or a corresponding computing unit
